# FASCICULE DE BREVET EUROPEEN

(11) **EP 3 331 841 B1**
(45) Date de publication et mention de la délivrance du brevet: **17.03.2021**
(21) Numéro de dépôt: 16822283.4
(22) Date de dépôt: 03.08.2016
(51) Int. Cl.: C05B 7/00, C01B 25/238, C05B 11/00

(54) **PROCEDE DE FABRICATION D'UN ENGRAIS A BASE DE PHOSPHATE D'AMMONIUM PRESENTANT UNE TENEUR REDUITE EN CADMIUM**
VERFAHREN ZUR HERSTELLUNG EINES AMMONIUMPHOSPHATDÜNGEMITTELS MIT NIEDRIGEM CADMIUMGEHALT
METHOD FOR MANUFACTURING AN AMMONIUM PHOSPHATE FERTILIZER HAVING LOW CADMIUM CONTENT

(30) Priorité: 03.08.2015 FR 1557483
(43) Date de publication de la demande: 13.06.2018
(73) Titulaire: OCP SA, Casablanca 20200 (MA)
(72) Inventeur: KHOULOUD, Mehdi, NR 18 EL JADIDA (MA); KOSSIR Abdelaali, CASABLANCA (MA); SAMRANE, Kamal, CASABLANCA (MA)
(74) Mandataire: Regimbeau
(86) Numéro de dépôt international: PCT/MA2016/000012
(87) Numéro de publication internationale: WO 2017/023153

(56) Documents cités:
- EP-A1- 0 040 122
- EP-A1- 0 638 516
- WO-A1-80/02418
- WO-A1-2015/082468
- FR-A1- 2 257 542
- FR-A1- 2 284 559
- MA-A1- 18 993

## Description

### DOMAINE DE L'INVENTION

La présente invention concerne un procédé de fabrication d'un engrais à base de phosphate d'ammonium présentant une teneur réduite en cadmium.

### ARRIERE PLAN DE L'INVENTION

Les minerais de phosphate constituent la principale source de phosphore utilisé dans la fertilisation des sols et l'amélioration des rendements agricoles. La transformation de la roche en engrais passe par la fabrication d'acide phosphorique, qui se fait presque exclusivement par voie humide via la lixiviation acide des minerais, cette dernière donne des acides qui après transformation donnent des engrais contenant la majeure partie des impuretés dont le cadmium. La qualité des minerais évolue et le cadmium, élément dont les teneurs dans les engrais sont limitées dans plusieurs pays, peut être présent dans les minerais de phosphate à des niveaux élevés.

Différentes voies de décadmiation des phosphates et de leurs dérivés ont été explorés jusqu'à présent. Certaines interviennent en amont de la valorisation chimique du minerai en traitant la roche phosphatée ; d'autres traitent l'acide phosphorique obtenu par traitement du minerai de phosphate par voie humide. Les procédés de décadmiation du minerai font intervenir de la calcination à haute température : ils sont donc particulièrement énergivores. Quant aux procédés de décadmiation après attaque du minerai, différents principes de bases ont été explorés, parmi lesquels :
- une décadmiation par co-cristallisation dans du sulfate de calcium anhydre. La répartition du cadmium entre l'acide phosphorique et le précipité de sulfate de calcium montre que la proportion de cadmium dans l'anhydrite peut être cent fois celle observée pour le dihydrate. Cette propriété permet de réduire le cadmium du milieu phosphorique au moyen d'une recristallisation. Ce principe est cependant limité lorsque des teneurs importantes en cadmium sont à réduire.
- une décadmiation par extraction liquide-liquide. Toutefois, les procédés d'extraction ne se sont pas montrés très adaptés techniquement et économiquement pour le traitement des grandes quantités de solutions mises en œuvre dans les procédés de fabrication d'engrais. Ceci est dû en particulier au coût élevé des solvants et aux problèmes techniques rencontrés, liés notamment à la formation d'émulsions.
- une décadmiation par résines échangeuses d'ions. Dans ce cadre, deux mécanismes peuvent être envisagés : (i) un échange cationique, qui nécessite dans le cas du cadmium des tours de tailles importantes pour des raisons d'affinité du cadmium ; de grands volumes de solution de régénération sont également produites et nécessitent un traitement adéquat ; (ii) un échange anionique, qui nécessite l'utilisation de sources d'halogénures (notamment de bromures ou iodures) pour former des ions halogénure/cadmium à haute affinité envers les résines utilisées.
- la précipitation chimique du cadmium.

Parmi les procédés se basant sur une précipitation chimique du cadmium, on peut citer le procédé objet du brevet US 4,986,970 qui utilise comme agents de précipitation des sels métalliques des dithio-O-esters d'acide carbonique. Ces agents de précipitation sont des produits organo-soufrés coûteux, de sorte que ce procédé n'est pas très attractif d'un point de vue économique.

Un autre procédé de décadmiation d'acide phosphorique, qui se base sur une précipitation par des sulfures, est celui proposé dans le brevet US 4,378,340 qui propose une pré-neutralisation de l'acide phosphorique en amont de la précipitation par les sulfures (Na₂S) en utilisant comme base l'hydroxyde d'ammonium, l'hydroxyde de potassium ou l'hydroxyde de sodium. Ce procédé donne des acides décadmiés incompatibles avec le mode de production classique des engrais MAP (Mono-Ammonium-Phosphate) et DAP (Di-Ammonium-Phosphate). En effet, elles peuvent conduire soit à une dilution importante dans le cas d'une solution d'hydroxyde d'ammonium (une solution saturée contient l'équivalent de 0,308 kg d'ammoniac/l) soit à une modification du milieu par introduction d'autres éléments dans le cas de l'hydroxyde de potassium ou de l'hydroxyde de sodium ce qui empêche l'obtention d'engrais MAP et DAP conformes

FR 2 284 559 et FR 2 257 542 divulguent des procédés de purification d'acide phosphorique obtenu par traitement de minerai de phosphate avec de l'acide sulfurique par voie humide comprenant des impuretés telles que du cadmium.

EP 0 040 122 A1 divulgue un procédé de préparation d'un produit particulaire solide contenant du phosphate d'ammonium.

A la connaissance des inventeurs, aucun des procédés de décadmiation existants n'est mis en oeuvre lors du processus de fabrication des engrais à base de phosphate d'ammonium.

Les engrais à base de phosphate d'ammonium sont fabriqués par réaction entre l'acide phosphorique et l'ammoniac pour former soit le phosphate de mono-ammonium (MAP) ou le phosphate de di-ammonium (DAP) suivant les réactions :

H₃PO₄ + NH₃ ⇆ NH₄H₂PO₄

H₂PO₄ + 2NH₃ ⇆ (NH₄)₂HPO₄

H₂SO₄ + 2NH₃ ⇆ (NH₄)₂SO₄

en contrôlant le rapport molaire ammoniac/acide phosphorique au cours du processus de neutralisation. La neutralisation de l'acide phosphorique avec l'ammoniac est généralement effectuée en plusieurs étapes au moyen de différents équipements de réaction : cuves agitées, réacteurs tubulaires, granulateurs, etc.

Dans une grande partie des procédés exploités actuellement on procède à une première étape de neutralisation généralement appelé pré-réacteur, le rapport molaire azote/phosphore (N/P) de la bouillie produite à cette étape est maintenu à une valeur qui confère un maximum de solubilité aux phosphates d'ammonium. Ce rapport molaire est réglé généralement entre 1,4 et 1,5 dans le cas du DAP et entre 0,6 et 0,7 dans le cas du MAP. La bouillie ainsi obtenue peut être introduite soit dans un réacteur supplémentaire généralement de type tubulaire pour y subir une avant-dernière ammoniation avant d'être pulvérisée dans le granulateur-ammoniateur, sur un lit de produit recyclé sur lequel on pulvérise également de l'ammoniac, ou bien introduite directement dans le granulateur-ammoniateur depuis le pré-réacteur sans ammoniation intermédiaire.

L'étape de granulation constitue donc la dernière étape d'ammoniation accompagnant la mise en forme en granules par le mouvement d'agitation du lit, engendré par la rotation de l'équipement de granulation. Cette étape permet également d'éliminer une partie de l'humidité du produit formé, mais une étape supplémentaire de séchage dans un équipement dédié est en général requise. Après séchage, le produit passe par une classification granulométrique, étape qui génère également la charge circulante recyclée vers le granulateur, le produit de granulométrie conforme est ensuite refroidi est traité par un enrobage qui permet d'améliorer sa qualité physique par rapport à la génération de poussière et/ou la prise en masse.

Avec ce processus de fabrication des engrais phosphatés tout le cadmium de l'acide phosphorique initial se retrouve au niveau des engrais produits.

### BREVE DESCRIPTION DE L'INVENTION

Un but de l'invention est de remédier aux inconvénients précités et de proposer un procédé de fabrication d'un engrais à base de phosphates d'ammonium présentant une teneur réduite en cadmium qui puisse être mis en oeuvre à une échelle industrielle et qui ne grève pas le coût dudit engrais.

Conformément à l'invention, il est proposé un procédé de fabrication d'un engrais à base de phosphates d'ammonium à partir d'une solution aqueuse d'acide phosphorique présentant une concentration inférieure à 50% P₂O₅ obtenue par traitement de minerai de phosphate par voie humide, ledit acide phosphorique contenant des traces de cadmium, comprenant les étapes suivantes :
(a) neutralisation de ladite solution d'acide phosphorique avec de l'ammoniac gazeux jusqu'à un rapport molaire N/P compris entre 0,1 et 0,8,
(b) réaction de ladite solution partiellement neutralisée avec une source de sulfures de sorte à former un précipité (9) de sulfure de cadmium,
(c) séparation dudit précipité de sorte à obtenir une solution clarifiée d'acide phosphorique ammonié,
(d) ammoniation et granulation de ladite solution clarifiée pour former ledit engrais.

Selon un mode de réalisation, avant l'étape d'ammoniation-granulation, on met en œuvre une ammoniation complémentaire de la solution clarifiée de sorte à obtenir un rapport molaire N/P déterminé pour l'obtention d'un engrais de type NP ou NPK.

De manière avantageuse, la concentration de la solution d'acide phosphorique est comprise entre 20 et 50% P₂O₅, préférentiellement entre 25 et 45% P₂O₅.

Selon un mode de réalisation préféré, le rapport molaire N/P lors de l'étape (b) de précipitation du sulfure de cadmium est compris entre 0,2 et 0,6, préférentiellement entre 0,3 et 0,5.

De manière avantageuse, la source de sulfures est utilisée en excès par rapport à la quantité de cadmium présente dans la solution d'acide phosphorique.

La source de sulfures introduite met généralement en œuvre entre 3 et 15 kg équivalent NaHS solide par tonne de P₂O₅.

Selon une forme d'exécution, la source de sulfures est une solution aqueuse de NaHS ou toute autre source de sulfures présentant une solubilité dans l'acide phosphorique suffisante pour atteindre le rapport stœchiométrique nécessaire à la décadmiation.

Selon un mode de réalisation, l'étape (b) de réaction avec la source de sulfures est réalisée dans un réacteur agité sous pression.

De manière alternative, l'étape (b) de réaction avec la source de sulfures est réalisée dans un réacteur tubulaire sous pression.

L'étape (a) de neutralisation partielle avec de l'ammoniac et l'étape (b) de réaction avec la source de sulfures peuvent être mises en œuvre séparément ou simultanément.

Selon un mode de réalisation, le procédé comprend, entre l'étape (c) de séparation et l'étape (d) de granulation, une étape de concentration de la solution clarifiée.

L' engrais susceptible d'être obtenu par le procédé tel que décrit ci-dessus présente une teneur en cadmium inférieure à 40 mg/kg P₂O₅.

### BREVE DESCRIPTION DES DESSINS

D'autres caractéristiques et avantages de l'invention ressortiront de la description détaillée qui va suivre, en référence aux dessins annexés sur lesquels :
- la figure 1 est un schéma de principe du procédé de fabrication d'engrais selon un mode de réalisation de l'invention,
- la figure 2 est un schéma de principe du procédé de fabrication d'engrais selon un autre mode de réalisation.

### DESCRIPTION DETAILLEE DE L'INVENTION

Le procédé de décadmiation mis en œuvre dans la présente invention repose sur une précipitation du cadmium sous forme de sulfures au cours du procédé de fabrication des engrais à base de phosphates d'ammonium.

Les sulfures, comme les carbonates, les oxydes et les hydroxydes, sont des sels insolubles dans l'eau. Comme le cadmium, d'autres éléments métalliques de trace donnent également des précipités MₙSₘ (M étant le symbole du métal en question, n et m représentent les proportions stoechiométriques dudit métal et de soufre dans le précipité) de très faible solubilité. La précipitation est, cependant, très affectée par l'acidité du milieu.

Le procédé selon l'invention se base sur un réajustement des étapes de réaction entre l'ammoniac et l'acide phosphorique nécessaires à la fabrication des engrais à base de phosphate d'ammonium, en y intégrant, quand le milieu réactionnel le favorise, une étape de précipitation du cadmium sous forme de sulfure de cadmium.

Les principales étapes du procédé de fabrication sont :
- une première étape de réaction entre l'acide phosphorique et l'ammoniac. La neutralisation partielle est faite jusqu'à un rapport molaire N/P de façon à éviter la formation des phosphates d'ammonium dans les conditions opératoires du procédé. Selon la concentration de la solution d'acide phosphorique en P₂O₅, qui peut atteindre jusqu'à 50% P₂O₅, un rapport molaire N/P compris entre 0,1 et 0,8 peut être utilisé.
- l'ajout d'une source minérale de sulfures, telle qu'une solution de NaHS par exemple, conduisant à la formation d'un précipité de sulfure de cadmium.
- la séparation dudit précipité vis-à-vis de l'acide ammonié, par une technique de séparation connue en soi, de sorte à obtenir une solution clarifiée d'acide phosphorique ammonié.
- éventuellement, la concentration de ladite solution clarifiée,
- le cas échéant, la mise en œuvre d'une ammoniation complémentaire de la solution clarifiée (éventuellement concentrée) pour obtenir le rapport molaire N/P souhaité pour l'engrais,
- la granulation de l'acide ammonié pour former l'engrais.

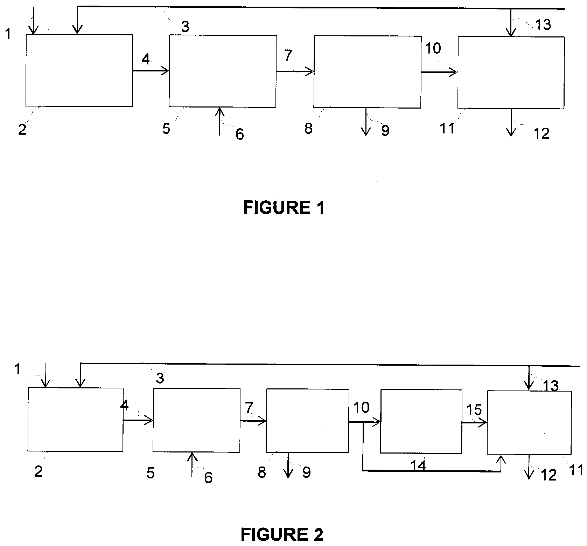

La figure 1 illustre un mode de réalisation dudit procédé.

Le produit de départ est une solution aqueuse d'acide phosphorique 1, contenant jusqu'à 50% P₂O₅, de préférence entre 20 et 50% P₂O₅, et de manière encore préférée entre 25 et 45% P₂O₅. Ladite solution présente une teneur en cadmium pouvant dépasser 150mg/kg P₂O₅.

Ladite solution 1 est introduite dans un réacteur gaz-liquide 2 où est également introduit de l'ammoniac gazeux 3. Le réacteur 2 peut être de type cuve agitée ou réacteur tubulaire. Le rapport molaire azote/phosphore de l'acide ammonié 4 formé dans le réacteur 2 est compris entre 0,1 et 0,8, de préférence entre 0,2 et 0,6, et de manière encore préférée entre 0,3 et 0,5.

On fait ensuite réagir l'acide ammonié 4 avec une source de sulfures 6 telle qu'une solution aqueuse de NaHS ou de Na₂S dans un réacteur 5 afin d'obtenir une solution 7 contenant un précipité de sulfure de cadmium. D'une manière générale, la source de sulfures peut être toute source de sulfures présentant une solubilité dans l'acide phosphorique suffisante pour atteindre le rapport stœchiométrique nécessaire à la décadmiation Le réacteur 5 peut être de type cuve agitée sous pression ou réacteur tubulaire. S'agissant de réactions rapides, les étapes de pré-neutralisation et de précipitation peuvent être réalisées simultanément, les réacteurs 2 et 5 étant alors confondus.

De manière particulièrement avantageuse, la source de sulfures est utilisée en excès par rapport à la quantité de cadmium présente dans l'acide phosphorique, afin d'assurer une précipitation de pratiquement tout le cadmium présent. Compte tenu des teneurs en cadmium habituellement rencontrées dans l'acide phosphorique, la quantité de NaHS solide est préférentiellement comprise entre 3 et 15 kg par tonne de P₂O₅.

Le précipité 9 est séparé dans un dispositif 8 de séparation par une technique de séparation connue, telle que la filtration, la décantation ou la centrifugation.

La solution clarifiée 10 obtenue à l'issue de l'étape de séparation subit ensuite une ammoniation complémentaire en une ou plusieurs étapes, lors de la granulation dans un granulateur 11 et/ou avant, avec de l'ammoniac à l'état gazeux et/ou liquide comprimé 13 afin d'atteindre le rapport molaire N/P souhaité pour l'engrais 12.

La granulation dans le granulateur 11 peut être faite en présence de différentes matières: engrais recyclé (charge circulante), sources d'éléments nutritifs et oligo-éléments, ballast, additifs, etc. selon les procédés en vigueur.

L'engrais granulé 12 peut être un engrais binaire (de type : MAP, DAP, etc.) ou ternaire (NPK) si une source de potassium est utilisée lors de la fabrication, ladite source étant ajoutée lors de la granulation.

La figure 2 illustre une variante d'exécution de l'invention. Les éléments identiques à ceux de la figure 1 sont désignés par les mêmes signes de référence et ne sont donc pas décrits à nouveau.

Cette variante comprend, après l'étape de séparation mise en œuvre dans le dispositif 8, une concentration par évaporation de la solution clarifiée 10 dans un dispositif 14 d'évaporation.

On peut ainsi mettre en œuvre les étapes préalables avec des concentrations basses en P₂O₅, (c'est-à-dire typiquement inférieures à 30 %), qui sont plus favorables à la précipitation des sulfures de cadmium. La granulation et, éventuellement, l'ammoniation complémentaire, peuvent être mises en œuvre avec la solution clarifiée 10 et la solution concentrée 15.

Quel que soit le mode de réalisation mis en œuvre, l'engrais obtenu présente une teneur en cadmium inférieure à 40 mg/kg P₂O₅.

### Exemple 1

Le produit de départ est une solution aqueuse d'acide phosphorique titrant 42% P₂O₅ et contenant 61 ppm de cadmium (soit 145,2 mg Cd/kg P₂O₅), fabriquée par voie humide par attaque sulfurique de minerai de phosphate.

On met en œuvre une ammoniation de ladite solution jusqu'à un rapport molaire N/P=0,4 dans un premier réacteur.

L'acide ammonié est ensuite introduit en continu à raison de 110 g/min avec 1,53 g/min d'une solution de NaHS à 30% en masse préparée à partir d'un NaHS solide à 70% de pureté (contenant environ 30% d'eau de cristallisation), dans un second réacteur, de type tubulaire.

Le temps de séjour dans ledit réacteur est de 3 min. et la température de réaction est de 80°C.

Le produit de la réaction est filtré de sorte à retirer le précipité de sulfure de cadmium, puis la solution ainsi clarifiée est ammoniée pour atteindre un rapport N/P de 1,85 et granulée sous forme de DAP.

L'engrais obtenu est caractérisé par une teneur en cadmium de 19,2 mg Cd/kg P₂O₅.

### Exemple 2

L'objectif de ce deuxième exemple est de montrer l'effet de la concentration en P₂O₅ de l'acide phosphorique de départ sur les performances de réduction de la teneur en cadmium, en comparant l'essai de l'exemple 1 avec deux autres essais réalisés selon le même protocole que dans l'exemple 1 mais avec différentes concentrations d'acide phosphorique.

Le tableau 1 résume les conditions des essais et les performances obtenues :

**Tableau 1**

| **Teneur en P₂O₅ de l'acide phosphorique (%)** | **29** | **38** | **42** |
|---|---|---|---|
| **Teneur moyenne en cadmium (ppm) dans le produit de départ (acide phosphorique)** | 45,7 | 55,9 | 61,0 |
| **Rapport Cd/P₂O₅ (mg/kg) dans le produit de départ** | 152,3 | 147,0 | 145,2 |
| **Rapport molaire d'ammoniation (N/P)** | 0,4 | 0,4 | 0,4 |
| **Temps de séjour dans le réacteur du mélange acide préammonié/NaHS (min)** | 3 | 3 | 3 |
| **Débit d'entrée de l'acide phosphorique ammonié (g/min)** | 95,95 | 102,52 | 109,39 |
| **Débit massique d'entrée de la solution NaHS (g/min)** | 0,87 | 1,30 | 1,53 |
| **Teneur en cadmium (mg Cd/kg P₂O₅) dans le produit final (engrais)** | 6,4 | 12,8 | 19,2 |
| **Rendement d'élimination du cadmium (%)** | 95,8 | 91,3 | 86,8 |

Les résultats présentés dans le tableau 1 montrent que, pour un même rapport N/P à l'issue de l'étape de pré-neutralisation, le rendement d'élimination du cadmium est meilleur avec une concentration en P₂O₅ réduite.

### Exemple 3

L'exemple 3 a pour but d'étudier l'effet du rapport molaire N/P de l'acide ammonié lors de la précipitation des sulfures de cadmium sur les performances de décadmiation de l'engrais.

A cet effet, on compare des essais réalisés avec une concentration de l'acide phosphorique de départ de 29% P₂O₅ et des rapports molaires de neutralisation partielle N/P respectivement de 0,2 ; 0,4 et 0,6.

Le tableau 2 résume les conditions des essais et les performances obtenues :

**Tableau 2**

| **Teneur en P₂O₅ de l'acide phosphorique (%)** | **29** | **29** | **29** |
|---|---|---|---|
| **Teneur moyenne en cadmium (ppm) dans le produit de départ (acide phosphorique)** | 45,7 | 45,7 | 45,7 |
| **Rapport Cd/P₂O₅ (mg/kg) dans le produit de départ** | 152,3 | 152,3 | 152,3 |
| **Rapport molaire d'ammoniation (N/P)** | 0,2 | 0,4 | 0,6 |
| **Temps de séjour dans le réacteur du mélange acide préammonié/NaHS (min)** | 3 | 3 | 3 |
| **Débit d'entrée de l'acide phosphorique ammonié (g/min)** | 95,95 | 95,95 | 95,95 |
| **Débit massique d'entrée de la solution NaHS (g/min)** | 0,87 | 0,87 | 0,87 |
| **Teneur en cadmium (mg Cd/kg P₂O₅) dans le produit final (engrais)** | 21,2 | 6,4 | 2,4 |
| **Rendement d'élimination du cadmium (%)** | 86,1 | 95,8 | 98,4 |

Les résultats présentés dans le tableau 2 montrent que, pour une même concentration de l'acide phosphorique de départ, le rendement d'élimination du cadmium est meilleur avec un rapport molaire d'ammoniation (N/P) élevé.

### Exemple 4

Cet exemple met à profit les bonnes performances de la décadmiation par le procédé utilisant une solution d'acide phosphorique diluée, ici avec une concentration de 27% P₂O₅, et mettant en œuvre une concentration ultérieure, selon le synoptique de la figure 2.

Le tableau 3 présente les conditions des essais et les performances obtenues avec deux rapports molaires d'ammoniation (respectivement 0,2 et 0,4) :

**Tableau 3**

| **Réf. de l'exemple** | **4.1** | **4.2** |
|---|---|---|
| **Teneur en P₂O₅ (%) de l'acide phosphorique** | 27 | |
| **Teneur moyenne en cadmium (ppm) dans** le **produit de départ (acide phosphorique)** | 41,2 | |
| **Cd/ P₂O₅ (mg/kg) entrée** | 152 | |
| **Rapport molaire d'ammoniation (N/P)** | 0,2 | 0,4 |
| **Temps de séjour dans le réacteur du mélange acide préammonié/NaHS (min)** | 3 | 3 |
| **Débit acide phosphorique ammonié (g/min)** | 96 | 96 |
| **Débit massique solution NaHS (g/min)** | 0,87 | 0,87 |
| **Teneur moyenne en Cd à la sortie (ppm)** | 5,1 | < l.d. |
| **Teneur en cadmium (mg Cd/kg P₂O₅) de la solution clarifiée avant l'étape de concentration** | 18,9 | - |

Comme vu dans l'exemple 3, la performance de décadmiation est meilleure avec le rapport molaire N/P le plus élevé.

Les deux acides pré-ammoniés, traités par le NaHS et clarifiés ont été ensuite concentrés sous un vide de 0,2 bar.

Le tableau 4 présente les conditions des essais et les performances obtenues avec deux solutions clarifiées :

**Tableau 4**

| **Réf. de l'exemple** | | **4.1** | **4.2** |
|---|---|---|---|
| **Acide phosphorique préammonié, traité par le NaHS et concentré** | P₂O₅(%) | 51,70 | 48,80 |
| | Teneur moyenne en Cd (ppm) | 9,7 | 1,0 |
| **Teneur en Cadmium (mg Cd/kg P₂O₅) dans le produit final (engrais)** | | 18,80 | 2,11 |
| **Rendement d'élimination du cadmium (%)** | | 85,2 | 98,6 |

## Revendications

1. Procédé de fabrication d'un engrais à base de phosphates d'ammonium à partir d'une solution aqueuse d'acide phosphorique présentant une concentration inférieure à 50% P₂O₅ obtenue par traitement de minerai de phosphate par voie humide, ledit acide phosphorique contenant des traces de cadmium, comprenant les étapes suivantes :
(a) neutralisation de ladite solution (1) d'acide phosphorique avec de l'ammoniac (3) gazeux jusqu'à un rapport molaire N/P compris entre 0,1 et 0,8,
(b) réaction de ladite solution partiellement neutralisée (4) avec une source (6) de sulfures de sorte à former un précipité (9) de sulfure de cadmium,
(c) séparation dudit précipité (9) de sorte à obtenir une solution clarifiée d'acide phosphorique ammonié (10),
(d) ammoniation et granulation de ladite solution clarifiée (10) pour former ledit engrais (12).

2. Procédé selon la revendication 1, **caractérisé en ce qu'**avant l'étape d'ammoniation-granulation on met en oeuvre une ammoniation complémentaire de la solution clarifiée (10) de sorte à obtenir un rapport molaire N/P déterminé pour l'obtention d'un engrais de type NP ou NPK.

3. Procédé selon l'une des revendications 1 ou 2, **caractérisé par le fait que** la concentration de la solution (1) d'acide phosphorique est comprise entre 20 et 50% P₂O₅, préférentiellement entre 25 et 45% P₂O₅.

4. Procédé selon l'une des revendications 1 à 3, **caractérisé par** un rapport molaire N/P lors de l'étape (b) de précipitation du sulfure de cadmium compris entre 0,2 et 0,6, préférentiellement entre 0,3 et 0,5.

5. Procédé selon l'une des revendications 1 à 4, **caractérisé par le fait que** la source (6) de sulfures est utilisée en excès par rapport à la quantité de cadmium présente dans la solution (1) d'acide phosphorique.

6. Procédé selon la revendication 5, **caractérisé en ce que** la source (6) de sulfures introduite met en oeuvre entre 3 et 15 kg équivalent NaHS solide par tonne de P₂O₅.

7. Procédé selon l'une des revendications 1 à 6, **caractérisé par le fait que** la source (6) de sulfures est une solution aqueuse de NaHS ou toute autre source de sulfures présentant une solubilité dans l'acide phosphorique suffisante pour atteindre le rapport stœchiométrique nécessaire à la décadmiation.

8. Procédé selon l'une des revendications 1 à 7, **caractérisé par le fait que** l'étape (b) de réaction avec la source (6) de sulfures est réalisée dans un réacteur agité sous pression.

9. Procédé selon l'une des revendications 1 à 7, **caractérisé par le fait que** l'étape (b) de réaction avec la source de sulfures est réalisée dans un réacteur tubulaire sous pression.

10. Procédé selon l'une des revendications 1 à 9, **caractérisé par le fait que** l'étape (a) de neutralisation partielle avec de l'ammoniac et l'étape (b) de réaction avec la source de sulfures sont mises en oeuvre séparément.

11. Procédé selon les revendications 1 à 9, **caractérisé par le fait que** l'étape (a) de neutralisation partielle avec de l'ammoniac et l'étape (b) de réaction avec la source de sulfures sont mises en oeuvre simultanément.

12. Procédé selon l'une des revendications 1 à 11, **caractérisé en ce qu'**il comprend, entre l'étape (c) de séparation et l'étape (d) de granulation, une étape de concentration de la solution clarifiée.

## Patentansprüche

1. Herstellungsverfahren eines Düngemittels auf Ammoniumphosphat-Basis ausgehend von einer wässerigen Lösung aus Phosphorsäure, die eine Konzentration von weniger als 50 % P₂O₅ aufweist und per mineralischer Phosphatbehandlung auf feuchtem Weg erhalten wird, wobei die genannte Phosphorsäure Spuren von Kadmium enthält, umfassend die folgenden Schritte:
(a) Neutralisieren der genannten Lösung (1) aus Phosphorsäure mit gasförmigem Ammoniak (3) bis zu einem zwischen 0,1 und 0,8 inbegriffenen Molverhältnis N/P,
(b) Reagieren der genannten, teilweise neutralisierten Lösung (4) mit einer Sulfidquelle (6) derart, dass eine Fällung (9) aus Kadmiumsulfid gebildet wird,
(c) Trennen der genannten Fällung (9) derart, dass eine geklärte Lösung (10) aus ammonierter Phosphorsäure erhalten wird,
(d) Ammonieren und Granulieren der genannten geklärten Lösung (10) zum Bilden des genannten Düngemittels (12).

2. Verfahren gemäß Anspruch 1, **dadurch gekennzeichnet, dass** vor dem Ammonierungs-Granulierungsschritt eine zusätzliche Ammonierung der geklärten Lösung (10) derart implementiert wird, dass ein Molverhältnis N/P erhalten wird, das für den Erhalt eines Düngemittels vom Typ NP oder NPK bestimmt wird.

3. Verfahren gemäß einem der Ansprüche 1 oder 2, **gekennzeichnet durch** die Tatsache, dass die Konzentration der Lösung (1) aus Phosphorsäure zwischen 20 und 50 % P₂O₅, bevorzugt zwischen 25 und 45 % P₂O₅ inbegriffen ist

4. Verfahren gemäß einem der Ansprüche 1 bis 3, **gekennzeichnet durch** ein Molverhältnis N/Pin dem Fällungsschritt (b) des Kadmiumsulfids, das zwischen 0,2 und 0,6, bevorzugt zwischen 0,3 und 0,5, inbegriffen ist.

5. Verfahren gemäß einem der Ansprüche 1 bis 4, **gekennzeichnet durch** die Tatsache, dass die Sulfidquelle (6) in Bezug auf die Kadmiummenge, die in der Lösung (1) aus Phosphorsäure vorhanden ist, im Übermaß verwendet wird.

6. Verfahren gemäß Anspruch 5, **dadurch gekennzeichnet, dass** die eingeführte Sulfidquelle (6) zwischen 3 und 15 kg-Äquivalent festes NaHS pro Tonne P₂O₅ umsetzt.

7. Verfahren gemäß einem der Ansprüche 1 bis 6, **gekennzeichnet durch** die Tatsache, dass die Sulfidquelle (6) eine wässerige Lösung aus NaHS oder jede andere Sulfidquelle ist, die eine Löslichkeit in der Phosphorsäure aufweist, die zum Erreichen des für die Entkadmierung notwendigen stöchiometrischen Verhältnisses ausreichend ist.

8. Verfahren gemäß einem der Ansprüche 1 bis 7, **gekennzeichnet durch** die Tatsache, dass der Reaktionsschritt (b) mit der Sulfidquelle (6) in einer unter Druck geschüttelten Reaktion realisiert wird.

9. Verfahren gemäß einem der Ansprüche 1 bis 7, **gekennzeichnet durch** die Tatsache, dass der Reaktionsschritt (b) mit der Sulfidquelle in einem röhrenförmigen Reaktor unter Druck realisiert wird.

10. Verfahren gemäß einem der Ansprüche 1 bis 9, **gekennzeichnet durch** die Tatsache, dass der Schritt (a) der Teilneutralisierung mit dem Ammoniak und der Reaktionsschritt (b) mit der Sulfatquelle getrennt umgesetzt werden.

11. Verfahren gemäß den Ansprüchen 1 bis 9, **gekennzeichnet durch** die Tatsache, dass der Schritt (a) der Teilneutralisierung mit dem Ammoniak und der Reaktionsschritt (b) mit der Sulfidquelle gleichzeitig umgesetzt werden.

12. Verfahren gemäß einem der Ansprüche 1 bis 11, **dadurch gekennzeichnet, dass** er zwischen dem Trennschritt (c) und dem Granulierungsschritt (d) einen Konzentrationsschritt der geklärten Lösung umfasst.

## Claims

1. Method for manufacturing an ammonium phosphate fertilizer from a phosphoric acid aqueous solution that has less than 50% P₂O₅ concentration and is obtained by wet phosphate ore treatment, said phosphoric acid containing traces of cadmium, comprising the following steps:
(a) neutralizing said phosphoric acid solution (1) with gaseous ammonia (3) up to a molar ratio N/P of between 0.1 and 0.8,
(b) reacting said partially neutralized solution (4) with a sulfide source (6) so as to form a cadmium sulfide precipitate (9),
(c) separating said precipitate (9) so as to obtain a refined ammoniated phosphoric acid solution (10),
(d) ammoniating and granulating said refined solution (10) so as to form said fertilizer (12).

2. Method according to claim 1, **characterized in that** before the ammoniating-granulating step a complementary ammoniation of the refined solution (10) is implemented so as to obtain a molar ratio N/P determined to obtain a NP or NPK type fertilizer.

3. Method according to one of claims 1 or 2, **characterized by** the fact that the concentration of the phosphoric acid solution (1) is between 20 and 50% P₂O₅, preferentially between 25 and 45% P₂O₅.

4. Method according to one of claims 1 to 3, **characterized by** a molar ratio N/P during the step (b) of precipitation of cadmium sulfide of between 0.2 and 0.6, preferentially between 0.3 and 0.5.

5. Method according to one of claims 1 to 4, **characterized by** the fact that the sulfide source (6) is used in excess with respect to the quantity of cadmium present in the phosphoric acid solution (1).

6. Method according to claim 5, **characterized in that** the sulfide source (6) introduced implements between 3 and 15 kg equivalent solid NaHS per ton of P₂O₅.

7. Method according to one of claims 1 to 6, **characterized by** the fact that the sulfide source (6) is an aqueous NaHS solution or any other sulfide source having sufficient solubility in phosphoric acid to reach the stoichiometric ratio necessary for decadmiation.

8. Method according to one of claims 1 to 7, **characterized by** the fact that the step (b) of reaction with the sulfide source (6) is carried out in a pressurized stirred reactor.

9. Method according to one of claims 1 to 7, **characterized by** the fact that the step (b) of reaction with the sulfide source is carried out in a pressurized tubular reactor.

10. Method according to one of claims 1 to 9, **characterized by** the fact that the step (a) of partial neutralization with ammonia and the step (b) of reaction with the sulfide source are implemented separately.

11. Method according to claims 1 to 9, **characterized by** the fact that the step (a) of partial neutralization with ammonia and the step (b) of reaction with the sulfide source are implemented simultaneously.

12. Method according to one of claims 1 to 11, **characterized in that** it comprises, between the step (c) of separating and the step (d) of granulating, a step of concentrating the refined solution.
